(19) Europäisches Patentamt
European Patent Office
Office européen des brevets

(11) **EP 4 203 404 A1**

(12) **EUROPEAN PATENT APPLICATION**

(43) Date of publication:
**28.06.2023  Bulletin 2023/26**

(21) Application number: **21306921.4**

(22) Date of filing: **23.12.2021**

(51) International Patent Classification (IPC):
*H04L 27/26* $^{(2006.01)}$        *H04L 5/00* $^{(2006.01)}$

(52) Cooperative Patent Classification (CPC):
**H04L 27/2602**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Eurecom**
**06410 Biot (FR)**

(72) Inventor: **KNOPP, Raymond**
**06410 BIOT (FR)**

(74) Representative: **Atout PI Laplace
Immeuble "Visium"
22, avenue Aristide Briand
94117 Arcueil Cedex (FR)**

(54) **DEVICE AND METHOD FOR TRANSMITTING CONTROL DATA  WITH MODERATE LOW PEAK-TO-AVERAGE POWER RATIO**

(57)    There is provided a transmitter device (1) for transmitting a digital input message corresponding to control data used in a control channel through a communication channel (3), the input message $m$ comprising a number $B$ of bits. The transmitter device comprises:
- a splitter (110) configured to split the input message m comprising said $B$ channel bits into a first component comprising $BV$ bits and a second component comprising $BH$ bits such that $B = BH + BV$, using a set of splitting parameters;
- A vertical code generator (112) configured to generate a vertical code $v_k(m)$ of size P from the first component of $BV$ bits;
- A horizontal code generator (114) configured to gener-

ate a horizontal code $h_l(m)$ of size $L$ from the second component of $BH$ bits;
- a combiner (14) configured to combine said vertical code $v_k(m)$ with said horizontal code $h_l(m)$, which provides a combined code sequence,
the transmitter device (1) comprising a modulator for each transmit antenna configured to apply a single carrier or multi-carrier modulation to the combined sequence, the transmitter device being configured to transmit the modulated combined sequence over the communication channel using the transmit antennas. The size $P$ of the vertical code is equal to the number of resource elements in each of the $L$ modulation symbols in time and/or frequency.

**1**

**FIGURE 2**

**Description**

**TECHNICAL FIELD**

The invention generally relates to digital communications and in particular to a device and a method for transmitting control data with moderate Peak-to-Average Power Ratio (PAPR).

**BACKGROUND**

Mobile communication systems are progressing at an accelerated pace, in order to satisfy increasing demands in terms of real-time services and applications with higher capacities.

Mobile communication systems are rapidly progressing from a 4th generation (4G) mobile communication system to the future 5th generation (5G) mobile communication systems which are being standardized to provide rich, reliable and hyper-connected communications. In particular, 5G New Radio presents significant challenges.

A mobile communication system comprises a transmitter that transmits digital data comprising information symbols to one or more receivers through a transmission channel. The receiver receives and decodes the transmitted signal using a reverse processing as the one implemented at the transmitter. The digital data transmitted by the transmitter can comprise user data bits and control data bits.

The main existing transmission control data formats for 5G NR systems comprise uplink control channels, such as physical uplink control channel (PUCCH) and physical random access channel (PRACH). Control data can also be multiplexed or transmitted exclusively on the physical uplink shared channel (PUSCH). Different transmission formats exist for such control channels such as for example LTE/NR PUCCH formats 0, 1, 2, 3 and 4 considered in current 3GPP systems (LTE stands for "Long Term Evolution").

A significant challenge for improving the transmission of such control channel data is to provide the transmitter with a capacity of transmitting small payloads (around tens of bits) with low probability of error at very low signal-to-noise ratios.

Such challenge can be generally achieved both by optimizing the energy efficiency of the transmit waveform through:

- a minimization of the peak-to-average power ratio (PAPR), and
- a design of strong structured coding strategies permitting low-complexity detection algorithms and coding gain.

Known solutions to reduce PAPR include peak windowing, scaling, and clipping. However, such approaches generate interference and distortions in the OFDM modulated signal which requires a further filtering to mitigate the interferences and distorsions.

Existing decoding algorithms used at the receivers to decode received signals corresponding to the current control channel formats (such as PUCCH) are based on sub-optimal reduced-complexity approaches. Such approaches consist of least-squares channel estimation based on the DMRS signals (DMRS stands for Demodulation Reference Signal) followed by quasi-coherent detection and soft-combining of repetitions from rate matching. These two operations yield soft-decisions for each of the coded bits. In the case of the RM code for example, a permutation is then applied to the 32 received soft-decisions to recuperate the bi-orthogonal structure of the code which is then amenable to reduced-complexity decoding via a fast Hadamard Transform as described in US8315185B2. For the polar-coded case, the soft-decisions are passed to one of the reduced-complexity polar decoding algorithms as described in Fast List Decoders for Polar Codes by Gabi Sarkis, Pascal Giard, Alexander Vardy, Claude Thibeault, and Warren J. Gross, IEEE Jounal on Selected Areas in Communications, VOL. 34, NO. 2, FEBRUARY 2016. In these two existing approaches, the algorithms are sub-optimal as the detection method uses separate channel estimation and quasi-coherent detection. Another possible solution would be to use a fully non-coherent receiver using the DMRS signals. However, such solution involves an increase in complexity, especially for a RM coded case with longer bit lengths.

There is accordingly a need for a transmission device and method for transmitting control data that ensure an optimized tradeoff between the constraint of achieving low (or zero) PAPR and the constraint of obtaining as much coding gain as possible.

**Summary of the invention**

To address these and other problems, there is provided a transmitter device for transmitting a digital input message corresponding to control data used in a control channel through a communication channel, the transmitter device comprising a set of transmit antennas, the input message $m$ comprising a number $B$ of bits, the device comprising:

- a splitter configured to split the input message m comprising the *B* channel bits into a first component comprising *BV* bits corresponding to a message $m_v \in [0,1, ..., 2^{BV} - 1]$ and a second component comprising *BH* bits corresponding to a message $m_H \in [0,1, ..., 2^{BH} - 1]$, such that $B = BH + BV$, using a set of splitting parameters;
- A vertical code generator configured to generate a vertical code $v_k(m)$ of size P from the first component of *BV* bits;
- A horizontal code generator configured to generate a horizontal code $h_l(m)$ of size L from the second component of *BH* bits;
- a combiner configured to combine the vertical code $v_k(m)$ with the horizontal code $h_l(m)$, which provides a combined code sequence;

the transmitter device comprising a modulator for each transmit antenna configured to apply a single carrier or multi-carrier modulation to the combined sequence, the transmitter device being configured to transmit the modulated combined sequence over the communication channel using the transmit antennas, the modulation providing modulation symbols grouped into resource blocks, each resource block comprising resource elements.

The size *P* of the vertical code may be equal to the number of resource elements in each of the *L* modulation symbols in time and/or frequency.

In one embodiment, the combined sequence may be derived from the product of the vertical code and the horizontal code.

In one embodiment, the combined sequence may be the product of the vertical code, a phasor term, and the horizontal code.

In some embodiments, the phasor term may be equal to $e^{j\beta lkmod2}$ and the combined code sequence may be equal to:

$$c_{l,k}(m) = v_k(m)e^{j\beta kmod2}h_l(m).$$

In some embodiments, each modulator is configured to provide modulation symbols grouped into resource blocks, each resource block comprising resource elements, and wherein the size *P* of the vertical code is equal to the number $\alpha K$, with $\alpha$ representing the number of modulation carriers per resource block and *K* represents the minimal number of physical resource blocks, the number L corresponding to the time-window over which the message is encoded, the vertical code corresponding to a vertical dimension representing the resource elements and the horizontal code corresponding to an horizontal dimension representing time or modulation symbols.

The vertical code may be configured to map the BV bits into the vertical vector $v_k(m)$ comprising P complex numbers from a given alphabet.

The horizontal code may be configured to map the BH bits into the horizontal vector $h_l(m)$ comprising L complex numbers from a given alphabet.

In some embodiments, the alphabet is a M-PSK alphabet.

Advantageously, the vertical code and the horizontal code may be constructed using a non-coherent block code.

The non-coherent code used to generate the vertical code may be determined as a codeword $m_v \in [0,1, ..., 2^{BV} - 1]$ from a (P, BV) linear error correcting code, of length P and a rank BV.

The non-coherent code used to generate the horizontal code may be chosen as a codeword $m_H \in [0,1, ..., 2^{BH} -1]$, from a (*L, BH*) linear error correcting code, of length L and a rank *BH.*

In some embodiments, the horizontal code may be constructed using an orthogonal code chosen from a unitary signal set. Each component of the unitary signal set may be of unit-amplitude.

In some embodiments, the horizontal code generator may be configured to perform a frequency-hopping operation to generate *F* a plurality of horizontal codewords $h_{l,f}(m)$, with l = 0,1, ..., L - 1 and f = 0,1, ..., F - 1, each elementary horizontal codeword being used for a particular part of the modulation spectrum at a different time instant when the elementary horizontal codeword is mapped to modulation symbols.

The plurality of F codewords may be generated from the same horizontal code and the *BH* bits.

The plurality of F codewords may be generated from the same horizontal code and the *BH* bits, the *BH* bits being previously permuted using a permutation operation.

The permutation operation may consist in permuting at least one pair of bits of the *BH* bits with another pair of bits of the *BH* bits.

In some embodiments, the numbers of bits *BV* of the vertical code and the number of bits of the horizontal code *BH* may be chosen so that the rates *BH/NH* and *BV/NV* are substantially equal, with *NH = L* and *NV = $\alpha$K*.

If *BH/NH* is less than $BH.2^{-\lfloor log2\,NH \rfloor}$, then an orthogonal code with $\lfloor log_2\,NH \rfloor$ bits may be used to generate the horizontal code.

If *BV/NV* is less than $BH.2^{-\lfloor log2\,NV \rfloor}$, then an orthogonal code with $\lfloor log_2\,NV \rfloor$ bits may be used to generate the vertical code.

The transmitter device may comprise a processing unit configured to perform a P-Discrete Fourier Transform processing of each column of the combined sequence, which provides a processing unit output comprising elements $M_{k,l}(m)$.

The (k,l)$^{th}$ output of processing unit may be defined by:

$$M_{k,l}(m) = \frac{1}{\sqrt{\alpha K}} \sum_{k'=0}^{\alpha K - 1} v_{k'}(m) e^{j\beta k' \bmod 2} e^{-j\left(\frac{2\pi k k'}{\alpha K}\right)} h_l(m),$$

with $k = 0, 1, ...., \alpha K - 1$ and $l = 0, 1, ..., L - 1$.

In some embodiments, the output of the processing unit may be mapped to the modulation symbols and each of the P elements of $M_{k,l}(m)$ for a particular 1 is mapped to the l$^{th}$ modulation symbol in adjacent frequency-domain positions.

There is further provided a method of transmitting a digital input message corresponding to control data used in a control channel through a communication channel, the transmitter device comprising a set of transmit antennas, the input message $m$ comprising a number $B$ of bits, the method comprising:

- splitting the input message $m$ comprising the B channel bits into a first component comprising $BV$ bits and a second component comprising $BH$ bits such that $B = BH + BV,$ using a set of splitting parameters;
- generating a vertical code $v_k(m)$ of size $P$ from the first component of $BV$ bits;
- generating a horizontal code $h_l(m)$ of size L from the second component of BH bits;
- combining the vertical code $v_k(m)$ with the horizontal code $h_l(m)$, which provides a combined code sequence;

   the method further comprises, for each transmit antenna, applying a single carrier or multi-carrier modulation to the combined sequence, and transmitting the modulated combined sequence over the communication channel using the transmit antennas, the modulation providing modulation symbols grouped into resource blocks, each resource block comprising resource elements,
   wherein the size $P$ of the vertical code is equal to the number of resource elements in each of the $L$ modulation symbols in time and/or frequency.

## Brief description of the drawings

The accompanying drawings, which are incorporated in and constitute a part of this specification, illustrate various embodiments of the invention together with the general description of the invention given above, and the detailed description of the embodiments given below.

   Figure 1 schematically represents an exemplary communication system implementing a transmitter according to some embodiments;

   Figure 2 is a block diagram representing a transmitter, according to certain embodiments of the invention;

   Figure 3 is a block diagram representing a device for generating a non-coherent code, according to an exemplary embodiment of the invention;

   Figures 4 and 5 are diagrams illustrating the performances of embodiments of the invention;

   Figure 6 is a flowchart depicting a transmission method, according to an exemplary embodiment of the invention.

## Detailed description

Embodiments of the present invention provide devices and methods for transmitting control data that relaxes the constraint of achieving low (or zero) PAPR in order to provide as much coding gain as possible using high-Performance code constructions based on a concatenation of a vertical codeword and a horizontal code.

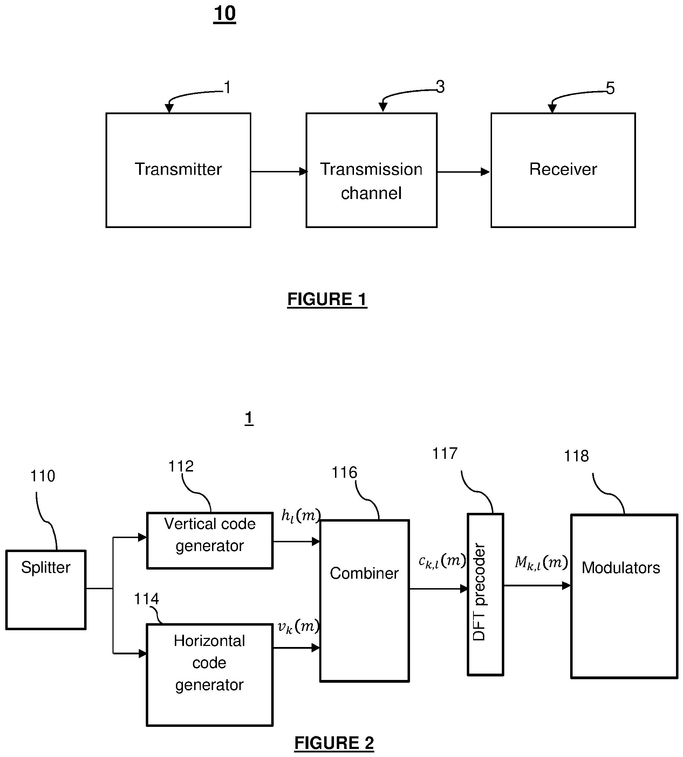

Figure 1 illustrates an exemplary communication system 10 in which embodiments of the invention can be implemented.

The communication system 10 may be for example a wireless communication system. The following description of embodiments of the invention will be made mainly with reference to a wireless communication system for illustration purpose although the skilled person will readily understand that the invention can also apply to other types of communication systems such as a wired system (for example optical fiber communication system).

The communication system 10 may comprise at least one transmitter device 1 (also referred to hereinafter as a "transmitter") configured to transmit a plurality of information symbols to at least one receiver device 5 (hereinafter referred to as "receiver") through a transmission channel 3 (also referred hereinafter to as a "communication channel").

The receiver 5 may be configured to receive the signal transmitted by the transmitter 1 and decode the received signal to recover the original data.

The transmission channel 3 may be any transmission channel adapted to transmit information symbols from the transmitter device 1 to the receiver device 5, depending on the type of the communication system, such as for example a wired connection channel, a wireless medium, an underwater communication channel, etc.

In an application of the invention to wireless communication systems such as ad-hoc wireless networks used in local area communications, wireless sensor networks and radio communication systems (e.g. LTE, LTE-advanced, 5G and beyond), the transmitter 1 and/or the receiver 5 may be any type of fixed or mobile wireless device configured to operate in a wireless environment.

The transmission channel 3 may be any wireless propagation medium adapted to such devices.

The transmitter 1 and/or the receiver 5 may be fixed or mobile and/or may be remotely monitored and/or controlled. The transmitter 1 and/or the receiver 5 may be equipped with power sources that provide power to the different components ensuring the operation of these devices (e.g. dry cell batteries, solar cells, and fuel cells).

The transmission channel 3 may represent any wireless network enabling IoT. Exemplary wireless networks comprise low-power short range networks and LPWANs. Exemplary LPWAN technologies comprise LTE-NB1 and NB-IoT.

Further, the transmission channel 3 may accommodate several pairs of transmitters 1 and receivers 5. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA).

The transmission channel 3 may be a noisy channel. For example, the noise may result from the thermal noise of the system components and/or the intercepted interfering radiation by antennas. Other exemplary sources of noise comprise switching, manual interruptions, electrical sparks and lightning. In some embodiments, the total noise may be modeled by an additive white Gaussian noise (AWGN).

The transmission channel 3 may be a multipath channel using single-carrier or multi-carrier modulation formats such as OFDM (Orthogonal Frequency Division Multiplexing) for mitigating frequency-selectivity, interference and delays.

In some embodiments, data transmission in the communication system 10 may correspond to an uplink communication scenario during which the receiver 5 is configured to receive data from one or more transmitters 1 operating in a wireless environment. The receiver 5 may be a base station, a relay station, an eNodeB/gNodeB in a cellular network, an access point in a local area network or in ad-hoc network or any other interfacing device operating in a wireless environment. The transmitter 1 may be, without limitation, a mobile phone, a computer, a laptop, a tablet, a drone, an IoT device etc.

According to some embodiments, the transmitter 1 and/or the receiver 5 may be equipped with a plurality of transmit and/or receive antennas. In such embodiments, space-time coding and/or space-time decoding techniques may be used in combination with coded modulations for encoding data both in the time and space dimensions, thereby exploiting space and time diversities of multiple antennas.

The receiver 5 can be also integrated in the base stations. The receiver 5 may be configured to receive a signal $y_P$ transmitted by the transmitter 2 in a wireless channel. The channel may be noisy (for example channel with Additive White Gaussian Noise (AWGN) subjected to fading). The signal transmitted by the transmitter 1 may be further affected by echoes due to the multiple paths and/or the Doppler effect due to the transmitter and receiver having a non-zero relative velocity.

The transmitter 1 is configured to transmit a digital input message m corresponding to control data used in a control channel through the communication channel 3.

According to some embodiments, the control data encoded at the transmitter 1 may correspond to control data used in physical control channels such as uplink control channels.

Exemplary uplink physical control channels comprise PUCCH ('Physical Uplink Control Channels'), the control portion of PUSCH (Physical Uplink Shared Channel) and PRACH (Physical Random Access Channel). Considering for example, a transmission of PUCCH data where the transmitted waveform makes use of prior information regarding synchronization with respect to the time window of the receiver 5 (for example a gNodeB), several PUCCH transmission formats in 5G NR can be used such as LTE/NR PUCCH format 2 or LTE/NR PUCCH formats 3 and 4 considered in current 3GPP systems.

The PAPR refers to a power characteristic that defines the average output power level of the power amplifier used in the transmitter 1 relative to the peak power. When the PAPR is high, the power amplifier of the transmitter 1 has to operate at a lower average power level. In contrast, a low PAPR enables the power amplifier at the transmitter to operate at a higher average power level with respect to the peak power. The PAPR of OFDM signals is defined as the ratio between the maximum instantaneous power and its average power.

The transmitter device 1 according to the embodiments of the invention improves the probability of correct detection compared to such existing solutions, even in extreme coverage scenarios which are characterized by low signal-to-noise ratio.

Figure 2 represents a transmitter 1 corresponding to a Concatenated Coding Scheme, according to some embodiments.

The transmitter 1 is configured to transmit a digital input message $m$ corresponding to control data used in a control channel through the communication channel 3. The control channel may be for example an uplink control channel such as PUCCH, control component of PUSCH or PRACH.

Although the invention has particular advantages for uplink control channels, it should be noted that some aspects of the invention may be also applied to downlink control channels.

The input message $m$ is defined as:

$$m = 0, 1, \ldots, 2^B - 1 \quad (1)$$

In Equation (1), $B$ represents the number of channel bits constituting the message $m$.

The signal received at the receiver 5 may be written as:

$$y_p = \mathrm{H}_p \mathrm{x}(m) + z_p \quad (2)$$

In equation (2), $y_p$ represents the signal vector in $N$ complex dimensions received on a receiver antenna port $p$, $\times(m)$ designates the $N$-dimensional modulated vector transporting the $B$ channel bits corresponding to the message $m$, and $z_p$ represents the additive white Gaussian noise having real and imaginary components being independent and have variance $\sigma^2$ in each dimension. Further, the matrix $\mathrm{H}_p$ is a $N \times N$ complex diagonal designating the complex value of the channel matrix representing the communication channel. The channel matrix $\mathrm{H}_p$ has arbitrary components unknown to the receiver 5.

In some embodiment, the modulated signal may satisfy $\|\mathrm{x}(m)\| = c \; \forall m$, where $c$ is an arbitrary constant.

In some embodiments, such as in the 3GPP 5G NR systems, the components of the modulated signal $\mathrm{x}(m)$ and the received signal $y_p$ may represent samples in frequency and time.

According to some embodiments, the transmitter 1 may comprise:

- a splitter 110 configured to split the input bitstream m comprising the $B$ channel bits into a first component comprising $BV$ bits, corresponding to a message $m_V \in [0, 1, \ldots, 2^{BV} - 1]$, and a second component, comprising $BH$ bits, corresponding to a message $m_H \in [0, 1, \ldots, 2^{BH} - 1]$, using a set of splitting parameters, such that $B = BV + BH$;

- A vertical code generator 112 configured to generate a vertical code $v_k(m)$ of size $P$ from the first component of BV bits;

- A horizontal code generator 114 configured to generate a horizontal code $h_l(m)$, of size $L$ from the second component of $BH$ bits.

The first component $m_V$ will be also referred to hereinafter as the 'vertical message' and the second component $m_H$ will be referred to hereinafter as the 'horizontal message'.

The vertical code sequence $v_k(m)$ is associated with a sequence index $k$, with $k = 0, \ldots, P - 1$, and the horizontal code sequence $h_l(m)$ is associated with a sequence index $l = 0, \ldots, L - 1$. The vertical code sequence $v_k(m)$ and the horizontal code sequence $h_l(m)$ may comprise complex numbers.

The set of splitting parameters may comprise user preferences and/or system preferences. The set of splitting parameters may be defined such that the mapping of the input message $m$ to the vertical and horizontal messages $m(m_V, m_H) \rightarrow \{0, 1, \ldots, 2^B - 1\}$ is one-to-one so that any pair $(m_V, m_H)$ uniquely determines m and vice-versa. The function $m(m_V, m_H)$ designates a mapping function which maps the input message $m$ to the vertical and horizontal messages $m_V$ and $m_H$.

The transmitter device 1 further comprises:

- a combiner 116 configured to combine the vertical code $v_k(m)$ generated by the vertical code generator 112 with the horizontal code $h_l(m)$ generated by the horizontal code generator, which provides a combined code sequence

$c_{k,l}(m)$, representing a 2-dimensional codeword; and

- a modulator 118, for each transmit antenna, configured to apply a single carrier or multi-carrier modulation to the combined sequence $c_{k,l}(m)$. Processing steps may be applied to the combined sequence $c_{k,l}(m)$ before application of the single or multicarrier modulation. The single or multi-carrier modulation provides modulation symbols grouped into resource blocks, each resource block comprising resource elements.

Advantageously, the size $P$ of the vertical code may be equal to the number $\alpha K$ of resource elements in each of the $L$ modulation symbols in time and/or frequency.

The transmitter device is configured to transmit a signal $x(m)$ derived from the modulated combined sequence $c_{k,l}(m)$ over the transmission channel 3 using the transmit antennas.

Each single carrier or multi-carrier modulator 118 may be configured to convert the constructed codeword or vector of spatially multiplexed symbols from the time domain to the frequency domain using a single carrier or a multi-carrier modulation technique.

Exemplary multi-carrier modulation techniques comprise OFDM (OFDM stands for Orthogonal Frequency-Division Multiplexing) and FBMC (FBMC stands for Filter Bank Multi-Carrier).

For example, in embodiments using OFDM modulation, the single carrier or multi-carrier modulators 118 may be OFDM modulators configured to apply OFDM modulation the combined sequence.

The following description of some embodiments of the invention will be made mainly with reference to OFDM modulation using OFDM modulators for illustration purpose only although the invention applies to other types of single-carrier or multi-carrier modulation.

The OFDM modulators 118 may be configured to convert the modulated symbols from the time domain to the frequency domain using a single or multicarrier modulation technique and spread the signals thus obtained over the $n_t$ transmission antennas of the transmitter 1, each transmission antenna being associated with an OFDM modulator.

In some embodiment, the transmitter device may further comprise a DFT processing unit 117 (precoder) configured to perform an $\alpha K$-dimensional DFT-precoding (DFT stands for Discrete Fourier Transform) before the modulation 118.

The signals may be sent from the $n_t$ transmit antennas optionally after filtering, frequency transposition and amplification by at least one power amplifier provided at the transmitter device 1.

The symbols of the vector $\mathbf{x}(m)$ may represent samples in both time and frequency. In particular, the frequency dimensions may be adjacent carriers in a multi-carrier symbol (for example an OFDM symbol) and the time dimensions may refer to different multi-carrier symbols. A time or frequency dimension is designated by a Resource Element.

The number $N$ of dimensions of the received signal $y_p$ may be a multiple of $KL$ (i.e. $N$ is the product of $KL$ with some integer $\alpha$).

More generally, $P = \alpha K$ represents the number of channel dimensions per symbol of the outer channel code. In the context of some time-domain spread-spectrum systems, $\alpha K$ may be the spreading factor. $L$ represents the time-window over which the message is encoded in the sense that the total time the channel is used to convey the message is directly proportional to $L$.

$L$ represents the number of modulation symbols (for example OFDM symbols) on which the information is spread and $K$ represents the minimal number of physical resource blocks (modulation carriers such as for example OFDM carriers). $\alpha$ represents the number of modulation carriers per resource block and $\alpha K$ represents the number of signaling dimensions per vector.

As used herein, a Resource Element (RE) refers to the smallest defined unit consisting of one modulation sub-carrier during one modulation symbol interval (for example one OFDM sub-carrier during one OFDM symbol interval). Each Resource Block (RB) designates a number of Resource Elements (RE). Resource blocks (RB) are used to map physical channels to resource elements RE.

An OFDM modulator 118 maps the $BV$-bit codewords on to M = $2^{BV}$ OFDM symbols and the $BH$-bit codewords into M'=$2^{BH}$ OFDM symbols, each symbol being a complex number representing the amplitude and phase of a modulation scheme (for example M-ary or M'-ary modulation scheme), and splits the resulting symbol stream into a number of parallel streams. The OFDM modulator 118 then modulates each symbol stream onto one of $\alpha$ different carriers.

For example, in an 3GPP application of the invention, the integer $\alpha$ is equal to 12 so that the number $N$ is given by $N = 12KL$ and $P = 12K$. Accordingly, each resource block contains 12 complex dimensions or resource elements over which coding is performed. In such 3GPP application, $K$ may be chosen in the range of 1 to 16 for example. Further, the number of symbols $L$ may be chosen in the range of 1 to 14 symbols for example, or may be more important if multiple slots are used to signal the $B$ bits.

The following description will be made mainly with reference to the number of signaling dimensions per vector $\alpha K$ equal to $12K$ ($\alpha = 12$) used in a 3GPP OFDM embodiment. However, the skilled person will readily understand that the invention is not limited to such value of $\alpha K$ and similarly applies to any number of dimensions.

The transmitter 1 may further comprise a space-time encoder (not represented) for delivering a codeword using a space time code before performing the modulation. In such embodiment, the space-time encoder is arranged between the combiner 116 and the OFDM modulators 118. The space-time encoder may be configured to perform space-time coding or spatial multiplexing in embodiments in which the transmitter 1 is equipped with a plurality of transmit antennas. Alternatively a beamforming unit or an antenna selection unit may be arranged between the combiner 116 and the OFDM modulators 118.

It should be noted that the receiver 5 implements a reverse processing of the processing implemented in transmission.

Advantageously, the vertical dimension corresponding to the vertical code $v_k(m)$ represents the resource elements, while the horizontal dimension corresponding to the horizontal code $v_k(m)$ represents modulation symbols (time or modulation symbols such as OFDM symbols).

Such splitting of the $B$ channel bits of the input bitstream $m$ into $BV$ bits and $BH$ bits advantageously allows for energy accumulation and limitation of the bandwidth of the transmit signal. The bandwidth limitation enables maximization of the spectral and energy efficiency particularly in situations of limited coverage.

The vertical code may be generated from given alphabet such as a M-PSK alphabet (PSK stands for "phase shift keying").

The combined sequence may be determined from the product of the vertical code $v_k(m)$ and the horizontal code $h(m)$. In one embodiment, the combined sequence may be determined as the product of the vertical code and the horizontal code. In another embodiment, the combined sequence may be determined as the product of the vertical code, a phasor term, and the vertical code.

The combiner 116 may therefore have two main functions.

The combiner 116 may be configured to firstly combine the vertical codewords $v_k(m)$ and the horizontal codewords $h(m)$ at its input to generate a 2-dimensional codeword $C_{k,l}(m)$ ($\alpha K \times L$) which can be mapped to $\alpha K$ elements in each of $L$ modulation symbols in time and frequency after the precoding or modulating operation. The combiner 116 may be further configured to perform a phase rotation for adjacent elements in the vertical codeword $v_k(m)$, using a phasor, so as to avoid zero-crossings in the complex envelope of the time-domain waveform. An element $(k,l)$ of the 2-dimensional codeword $C_{k,l}(m)$, at the output of the combiner 116 may be written as:

$$C_{k,l}(m) = v_k(m)e^{j\beta k mod 2}h_l(m) \quad (3),$$

In equation (3), k = 0,1, ....,12K - 1 and 1 = 0,1, ...,L - 1. The parameter $\beta$, also called hereinafter 'rotation parameter', designates a real number chosen to minimize peak-to-average power ratio.

If the vertical code $v_k(m)$ is generated from a M-PSK alphabet, the parameter M may be chosen to match the modulation order. If the vertical code $v_k(m)$ is not generated from a M-PSK alphabet, the rotation parameter $\beta$ may be used that ensures that adjacent vertical symbols are not on the same axis ($\beta$ may be integer or non integer in this case).

For an arbitrary modulation used in the vertical code $\beta$ may be optimized.

In a 4-ary application of the invention ($\beta=\pi/4$), the combiner 116 may be configured to determine the combined code sequence $c_{k,l}(m)$ as the product of the vertical code $v_k(m)$, the phasor $e^{j\left(\frac{\pi}{4}\right)k mod 2}$ and the horizontal code $h_l(m)$, according to equation (4A):

$$c_{k,l}(m) = v_k(m)h_l(m)e^{j\left(\frac{\pi}{4}\right)k mod 2} \quad (4A)$$

More generally, an element $(k, l)$ of the 2-dimensional codeword $C_{k,l}(m)$, at the output of the combiner 116 may be written as:

$$C_{k,l}(m) = v_k(m)e^{j\beta k mod 2}h_l(m) \quad (4B)$$

In equation (4B), the phasor term is $e^{j\beta k mod 2}$ and $\beta$ is chosen to minimize the PAPR and depends on the modulation chosen for the vertical code. For example for a QPSK modulation, $\beta = \pi/4$.

This ensures that the "even" dimensions are the original constellation and the "odd" dimensions be rotated. This further ensures that the trajectory between the two dimensions (in time) can never cross the origin.

It should be noted that in some embodiments, the phasor term can be omitted. The phasor term may be used in embodiments where it is needed to limit peak-to-average power ratio when applied on the time-domain signal.

Such concatenation of the vertical codeword $v_k(m)$ with a horizontal codeword $h_l(m)$ corresponds to a modified Kroneker product $c_{k,l}(m) = v_k(m)h_l(m)e^{j\beta lk \bmod 2}$. The phasor $e^{j\beta lk \bmod 2}$ enables avoiding zero-crossings prior to performing a DFT precoding.

The combination of such phase-shifting and the DFT precoding advantageously limits the PAPR at the output of the transmitter device 1.

The splitter 110 may be configured to apply a function that takes as input the B bits and selects any combination of BV bits among the $B$ bits to be used as an input to the vertical code generator 112 (to select one of $2^{BV}$ codewords). The function applied by the splitter 110 further selects any combination of BH bits among the B bits, such that $B = BV + BH$, to be used as an input to the horizontal code generator 114 (to select one of $2^{BH}$ codewords).

In one embodiment, the vertical code generator 112 is configured to map the selected $BV$ bits into the vertical code vector $v_k(m)$, $k = 0, 1, ..., 12K - 1$ comprising $M$ complex numbers from a given alphabet. The alphabet may be for example a M-PSK alphabet. Although the invention has particular advantages for a vertical code generated from a M-PSK alphabet, the vertical code may be generated from other types of alphabets.

Similarly, the horizontal code generator 114 may be configured to map the selected $BH$ bits into the horizontal vector $h_l(m)$, $l = 0, 1, ..., L - 1$ comprising $L$ complex numbers from a given alphabet, such that a M-PSK alphabet.

The vertical code vector and/or the horizontal code vectors may be constructed from the alphabet using a non-coherent block code. The use of a non-coherent block code is particularly advantageous if the numbers $BH$ and $L$ are small enough to allow orthogonal transmission.

In some embodiments, the numbers $BV$ and $BH$ may be chosen so that the rates $BH/NH$ and $BV/NV$ are substantially equal, where $NH = L$ and $NV = \alpha K$ (for example $\alpha = 12$). If $BH/NH$ is less than $BH.2^{-\lfloor \log_2 NH \rfloor}$, then an orthogonal code with $\lfloor \log_2 NH \rfloor$ bits may be used to generate the horizontal code (i.e. an orthogonal horizontal code with $\lfloor \log_2 NH \rfloor$ bits may be used). If $BV/NV$ is less than $BH.2^{-\lfloor \log_2 NV \rfloor}$, then an orthogonal code with $\lfloor \log_2 NV \rfloor$ bits may be used to generate the vertical code (i.e. an orthogonal code with $\lfloor \log_2 NV \rfloor$ bits may be used). If $NH$ and $NV$ are quite different, the bitwidth of the longer dimension ($BH$ or $BV$) may be increased to find a more powerful code for the longer block length more easily while a lower rate code for the shorter blocklength may be chosen.

The horizontal code may be constructed from a non-coherent code similar to the non-coherent code used to generate the vertical code or from a simpler orthogonal code, in particular when $L$ and BH are small.

In embodiments where the horizontal code is constructed from a simpler orthogonal code, the elements of the orthogonal code may be chosen from a unitary signal set. Advantageously, the unitary signal set may be a unitary set where each component is of unit-amplitude.

An example of such an orthogonal code is the column or row of a Hadamard matrix (real or complex). Such codes have elements on the unit-circle and have additional properties which may be exploited for efficient algorithms (such as Fast-Fourier or Fast Hadamard Transforms algorithms).

In some embodiments, the horizontal code generator 114 may be configured to perform a frequency-hopping operation to generate a plurality of F horizontal codewords $h_{l,f}(m)$, $l = 0, 1, ..., L - 1$, $f = 0, 1, ..., F - 1$ from the same horizontal code and the BV bits. The F horizontal codewords may be different. Each horizontal codeword may be used for a particular part of the OFDM spectrum at a different time instant when the horizontal codeword is mapped to OFDM symbols.

The code sequences for each hop may be generated from the same input bit sequence but from different codes of preferably the same code rate. If all codes are of the same rate, a permutation of the data bits as the input of a common code may be used to ensure the best performance. Each hop may then simply use a different permutation of the data bits. For example if the block lengths used in the hops are different, the codes may be advantageously different.

The frequency hopping allows for diversity by averaging interference across multiple hops. The interference can be due for example to frequency-selective signal fading or multiuser interference or a combination of the two.

The $BH$ bits may be permuted using a permutation operation, prior to generating the plurality of F horizontal codewords from the horizontal code and the $BH$ bits.

In some embodiments, the permutation operation may consist in reversing the order of one or more pairs of bits in the BV bit sequence. In one embodiment, the permutation operation may consist for example in permuting the position of at least one pair of bits in the BV sequence with another pair of bit of the BV bit sequence. For example, in an application of the invention using a 4-PSK alphabet (4-PSK code), assuming that the BV bits comprise the bits {b0,b1,b2,b3,b4,b5}, the permutation operation may consist in permuting the BV bits to replace the bits by {b4,b5,b2,b3,b0,b1}, thereby permuting the pair {b0, b1} with the pair {b4,b5}.

More generally, a permutation that improves performance may be any permutation that ensures the output codes sequences are not simply repetitions.

The permutation avoids repeating the same sequence in the different parts of the spectrum.

In one embodiment, where the message mapping function $m(m_V, m_H)$ is defined as $m(m_V, m_H) = m_v + m_H 2^{BV}$, the vertical code $v_k(m)$ generated by the vertical code generators 110 may be chosen as a codeword $m \bmod 2^{BV}$, from

a ($\alpha K$, BV) linear error correcting code, having a length $\alpha K$ and a rank (BV), the linear error correcting code being represented by a generator matrix $G(BV, \alpha K)$ given in a systematic form:

$$G(BV, \alpha K) = \begin{pmatrix} I_{\alpha K} & G_{\alpha K \times (BV) - \alpha K} \end{pmatrix} \quad (5)$$

The horizontal code $h_l(m)$ generated by the horizontal code generator 112 may be chosen as a codeword $\lfloor m$ $mod\ 2^{-BV} \rfloor$, from a (L, BH) linear error correcting code, having a length L and a rank (BH), the linear error correcting code being represented by a generator matrix $G(BH, L)$ given in a systematic form:

$$G(BH, L) = \begin{pmatrix} I_L & G_{L \times (BH) - L} \end{pmatrix} \quad (6)$$

In equations 5 and 6, $I_{\alpha K}$ designates the identity matrix of dimensions $\alpha K \times \alpha K$, $I_L$ designates the identity matrix of dimensions $LxL$, $G_{\alpha K \times BV - \alpha K}$ designates a rectangular matrix comprising $\alpha K$ lines or row vectors and $BV - \alpha K$ columns or column vectors, and $G_{L \times BH - L}$ each designates a rectangular matrix comprising $L$ lines or row vectors and $BH - L$ columns or column vectors. The linear error correcting code may be generated for example as described in EP application N°20305929.0.

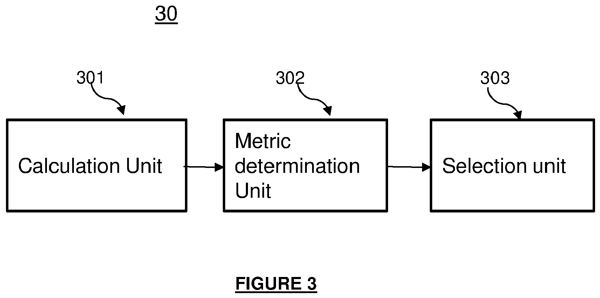

EP N°20305929.0 describes a device for determining such linear error correcting code. Figure 3 illustrates the steps performed to generate the linear error correcting code according to EP N°20305929.0.

As shown in figure 3, the device 30 for determining the linear error correcting code comprises:

- a calculation unit 301 configured to determine two or more candidate generator matrices, each candidate generator matrix defining a linear error correcting code and comprising values selected from a predefined set of values, each candidate generator matrix providing a set of codeword vectors from input vectors, the input vectors comprising values selected from the predefined set of values;
- a metric determination unit 302 configured to associate a vector metric to each pair of codeword vectors provided by each candidate generator matrix for a predefined modulation scheme and to associate a matrix metric to each candidate generator matrix, a matrix metric associated with a candidate generator matrix being the minimum value among the vector metrics associated with the pairs of codeword vectors provided by the candidate generator matrix;
- a selection unit 303 configured to select the one or more candidate generator matrices that are associated with the highest matrix metric among the two or more candidate generator matrices.

The linear error correcting code generated is represented by the selected one or more candidate generator matrices.

The selection unit 303 is configured to select, among the one or more candidate generator matrices associated with the highest matrix metric, the candidate generator matrix that is associated with the highest matrix metric and that provides a minimum number of pairs of codeword vectors that are associated with a vector metric equal to the highest matrix metric, these pairs of codeword vectors comprising a zero-valued codeword vector and a non-zero valued codeword vector.

The calculation unit 301 may be configured to previously determine a first set of candidate generator matrices comprising two or more candidate generator matrices and to determine at least one candidate generator matrix from the first set of candidate generator matrices.

The calculation unit 301 may be configured to determine extended codeword vectors from the codeword vectors provided by the selected one or more candidate generator matrices using a code extension by applying a complex or a real Hadamard matrix of one or more codes.

Each pair of codeword vectors may comprise a first codeword vector and a second codeword vector, the calculation unit 301 being configured to determine a first value by mapping the first codeword vector using the predefined modulation scheme and to determine the second value by mapping the second candidate vector using the predefined modulation scheme, the metric determination unit 302 being configured to determine the vector metric associated with each pair of codeword vectors as the absolute value of the pairwise correlation between the first value and the second value.

The linear error correcting code may be binary or quaternary or 4-ary code.

Each OFDM modulator 118 or the precoder 117 may be configured to perform a $\alpha K$-DFT of each column of the 2-dimensional codeword $c_{k,l}(m)$. The $(k,l)^{th}$ output $M_{k,l}(m)$ of a OFDM modulator 118 or the DFT-precoder 117 is defined as by Equation (7):

$$M_{k,l}(m) = \frac{1}{\sqrt{\alpha K}} \sum_{k'=0}^{\alpha K-1} v_{k'}(m) e^{j\beta k' \bmod 2} e^{-j\left(\frac{2\pi k k'}{\alpha K}\right)} h_l(m) \quad (7)$$

In equation 7, $k = 0, 1, ...., \alpha K - 1$ and $l = 0, 1, ..., L - 1$. In a 3GPP application of the invention, $\alpha$ may be equal to 12.

The modulated or precoded output is then mapped to OFDM symbols and may be multiplexed with other control and data resources. Each of the $\alpha K$ elements of $M_{k,l}(m)$ for a particular 1 is mapped to the $l^{th}$ OFDM symbol in adjacent frequency-domain positions. In the embodiment where frequency-hopping is applied, the $\alpha K$ adjacent elements can be distributed arbitrarily in the frequency grid for different OFDM symbols, but they may be spaced as uniformly as possible to provide a maximum amount of diversity to combat signal fading.

The code rates of the vertical and horizontal codes may be chosen to be similar. If, however, the vertical bits BV (or respectively the horizontal bits BH) are needed to have a higher level of protection, the code rate of the higher protection level bits may be chosen to be lower, although this may increase the overall error probability.

The resulting time waveform $s_l(m, t)$ after the OFDM modulation performed by the OFDM modulators is given by:

$$s_l(m, t) = \sum_{k=0}^{\alpha K-1} M_{k,l}(m) \, e^{-j2\pi k \Delta f(t - N_{CP,l}T_c)} \quad (8)$$

The PAPR is defined is then defined as:

$$\text{PAPR}(\mathbf{r}_l(m)) = \frac{\max_t |s_l(m,t)|^2}{\lim_{T\to\infty} \frac{1}{T} \int_0^T |s_l(m,t)|^2 dt} \quad (9)$$

In Equation (9), $\max_t |s_l(m, t)|^2$ represents the maximum instantaneous power and $\lim_{T\to\infty} \frac{1}{T} \int_0^T |s_l(m, t)|^2 dt$ represents its average power.

For large enough value of the number $N$, equation (9) can be rewritten as :

$$\text{PAPR}(\mathbf{r}_l(m)) \approx \frac{\max_{n=0,1,...,N} \left| \sum_{k=0}^{\alpha K-1} M_{k,l}(m) \, e^{-j2\pi kn/N} \right|^2}{\sum_{k=0}^{\alpha K-1} |M_{k,l}(m)|^2} \quad (10)$$

Equation (10) may be implemented using a fast Fourier Transform when optimizing the vectors for low PAPR.

The use of a non-coherent code to generate the vertical and/or horizontal code provides in particular also allows for both reduced-complexity decoding and unequal error protection.

In the embodiments where the components BH and BV are such that BH < BV, the error probability for the BH bits is lower, offering unequal error protection. The same is true if the condition is reversed in which case the error probability of the *BV* bits is lower.

In one embodiment, the receiver 5 may be a two-step receiver which first decodes the smaller of *BH* or *BV* by non-coherently combining the L received symbols or non-coherently combining the $\alpha K$ resource elements. This enables significantly reducing computational complexity, especially in the case of the larger payload sizes.

A general case of the detection problem defined by equation (11) is considered:

$$\mathbf{y}_{l,p} = H_{l,p}\mathbf{x}(m) + \mathbf{z}_{l,p}, l = 0, ..., L-1 \quad (11)$$

In Equation (11), $\mathbf{H_{l,p}}$ is defined by $\mathbf{H_{l,p}} = \text{diag}(H_{l,k,p})$ where $H_{l,k,p}$ is the complex channel response for OFDM symbol 1 and subcarrier k on antenna port $p$.

In one embodiment, the receiver 5 may be a near-optimal receiver 5 for a completely unknown channel realization configured to determine an estimate $\hat{m}$ of the original message m by solving the optimization problem defined by:

$$\hat{m} = \text{argmax}_m \sum_{p=0}^{P-1} \left| \sum_{l=0}^{L-1} \mathbf{y}_{l,p} \mathbf{x}^H(m) \right|^2 \quad (12)$$

In some embodiments, $\hat{m}$ may be defined from $\hat{m}_V$ and $\hat{m}_H$. In one embodiment, $\hat{m}$ may be defined as:

$$\hat{m} = \hat{m}_V + \hat{m}_H 2^{BV} \quad (13)$$

Alternatively, the receiver 5 may be a low-complexity receiver which first detects the BV bits (first detection step) and then separately detects the remaining BH bits (second detection step).

For example, considering if $BV \leq BH$, the receiver 5 may comprise a detector for detecting the first BV bits (in the first detection step) defined by determining an estimation $\hat{m}_V$ of the BV bits of the original message $m$:

$$\hat{m}_V = \text{argmax}_{m_V=0,1,...,2^{BV}-1} \sum_{p=0}^{P-1} \sum_{l=0}^{L-1} \left| y_{l,p} x_{l^*}^H (m(m_V, m_H^*)) \right|^2 \qquad (14)$$

In equation (14), $m_H^*$ and l* are arbitrary. The remaining $BH$ bits of the original message $m$ (in the second detection step) may be chosen as:

$$\hat{m}_H = \text{argmax}_{m_H=0,1,...,2^{BH}-1} \sum_{p=0}^{P-1} \left| \sum_{l=0}^{L-1} y_{l,p} x_l^H (m(\hat{m}_V, m_H)) \right|^2 \qquad (15)$$

Assuming that $\hat{m}$ is defined according to equation (13), from a complexity standpoint, in the first step of the detection, the number of complex multiplications may be 12P2^BVLK, while in the second step of the detection, the number of complex multiplications may be 12P2^BHLK. For example, the total of complex multiplications for P = 1, K = 1, L = 14, $B_V$ = 12, $B_H$ = 10 is equal to 860160 complex multiplications.

In comparison, a full receiver defined by equation (12) would require 704643072 complex multiplications. Performance may be still increased by integrating a list of several hypotheses in addition to the one corresponding to the maximum defined by equation (12) at the expense of increasing the second term governing the complexity. For example, with two hypotheses, the total complexity would rise to 1720320 complex multiplications.

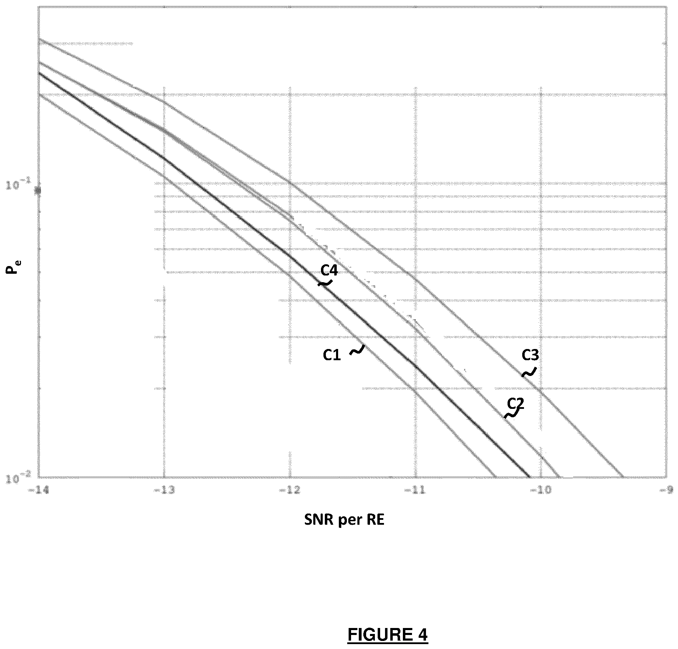

Figure 4 shows a diagram representing the Probability error $P_e$ as a function of the SNR (Signal-to-Noise Ratio) per Resource Element (in dB), obtained for an exemplary implementation of the invention (first simulation example) using an input bitstream m comprising 11 bits transmitted over one 5G NR slot (comprising 14 symbols), in an embodiment where the horizontal code generation uses frequency-hopping, in comparison to prior art solutions.

The vertical code $v_k(m)$ is constructed from a (12, 7) linear error correcting code ($\alpha K$=12 and BV=7) using a generator matrix G(12, 7) and the horizontal code $h_l(m)$ is constructed from a (7,4) linear error correcting code (L=7 and BH=4) using a generator matrix G(7,4), according to the embodiment of figure 3. Specifically, the vertical codeword $v_k(m)$ is generated with 7 bits from the 11 bits of the input bitstream $m$ and two horizontal codewords $h_{l,1}(m)$ and $h_{l,2}(m)$ are generated from the 4 remaining bits of the input bit stream $m$, for each half-slot which are transmitted in maximally-spaced frequency-domain positions (corresponding in this example to Physical Resource Blocks (PRBs) 0 and 272 for frequencies 100 MHz and 30kHz with the same subcarrier Spacing SCS) by applying the frequency-hopping operation. The same 4 $BH$ bits of the input bit stream $m$ are used to select the two codewords $h_{l,1}(m)$ and $h_{l,2}(m)$, with the second horizontal codeword $h_{l,2}(m)$ using a permutation of the input bits to not repeat the same sequence in both parts of the spectrum.

The diagram of figure 4 has been obtained from a simulation on a TDL-C channel model (TDL stands for "Tapped Delay Line") with 4 RX antennas at the gNodeB (a RX antenna designates a receiver antenna). The performance of the invention is compared in the diagram to a prior solution based on a π/2-BPSK modulation and 2 DMRS symbols (curve C2), a prior solution based on a π/2-BPSK modulation and 4 DMRS symbols (curve C3), and a prior art solution based on a Rel-17 solution (Curve C4). It can be noted from the diagram of figure 4 that the performance with 2 DMRS (Curve C2) is quite superior to the 4 DMRS case (Curve C4) and that the performance of the invention, represented by curve C1, outperforms the prior art solutions represented by curves C2, C3 and C4, as the curve C1 corresponding to the invention is below the curves C2, C3 and C4.

The embodiments of the invention therefore enable obtaining a moderate PAPR, while providing lower overall error probability or a as high as possible coding gain.

Such exemplary application of the communication system 10 of the invention, illustrates the advantages for using the proposed coding construction to provide unequal error-protection in addition to enhanced coverage.

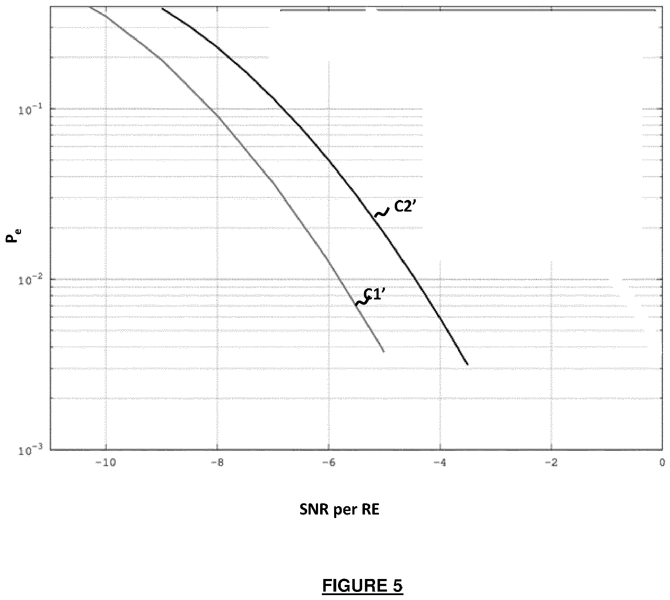

Figure 5 is a diagram illustrating the performance of the invention, for another exemplary implementation of the invention.

In the implementation of figure 5 (second simulation), the input bistream m comprises 22 bits transmitted over one 5G NR slot (comprising 14 symbols) with frequency-hopping.

The vertical code $v_k(m)$ is a QPSK code constructed from a (12,12) linear error correcting code ($\alpha$K=12 and BV=12) using a generator matrix G(12, 12) and the horizontal code $h_l(m)$ is constructed from a (7,10) linear error correcting code (L=7 and BH=10) using a generator matrix G(7,10), according to the embodiment of figure 3. Specifically, the vertical codeword $v_k(m)$ is generated with 12 bits from the 11 bits of the input bitstream $m$ and two horizontal codewords $h_{l,1}(m)$ and $h_{l,2}(m)$ are generated from the 10 remaining bits of the input bit stream $m$, for each half-slot which are transmitted in maximally-spaced frequency-domain positions (corresponding in this example to Physical Resource Blocks (PRBs) 0 and 272 for frequencies 100 MHz and 30kHz with the same subcarrier Spacing SCS), by applying the frequence-hopping operation. The same 10 *BH* bits of the input bit stream m are used to select the two codewords $h_{l,1}(m)$ and $h_{l,2}(m)$, with the second horizontal codeword $h_{l,2}(m)$ using a permutation of the input bits to not repeat the same sequence in both parts of the spectrum.

In this example, the generator matrices G(12,12) and G(7,10) are:

$$\mathbf{G}(12,12) = \begin{bmatrix} 1 & 0 & 0 & 0 & 0 & 0 & 1 & 0 & 3 & 2 & 3 & 1 \\ 0 & 1 & 0 & 0 & 0 & 0 & 1 & 0 & 3 & 3 & 1 & 2 \\ 0 & 0 & 1 & 0 & 0 & 0 & 1 & 3 & 3 & 1 & 0 & 2 \\ 0 & 0 & 0 & 1 & 0 & 0 & 0 & 3 & 2 & 1 & 1 & 1 \\ 0 & 0 & 0 & 0 & 1 & 0 & 2 & 0 & 0 & 3 & 2 & 1 \\ 0 & 0 & 0 & 0 & 0 & 1 & 2 & 0 & 1 & 2 & 0 & 1 \end{bmatrix}$$

$$\mathbf{G}(7,10) = \begin{bmatrix} 1 & 0 & 0 & 0 & 0 & 1 & 1 \\ 0 & 1 & 0 & 0 & 0 & 1 & 1 \\ 0 & 0 & 1 & 0 & 0 & 1 & 1 \\ 0 & 0 & 0 & 1 & 0 & 1 & 1 \\ 0 & 0 & 0 & 0 & 1 & 0 & 3 \end{bmatrix}$$

This diagram of figure 5 has been obtained in this example on a TDL-C channel model with 4 RX antennas at the gNodeB.

The performance of the invention (Curve C1') is compared in the diagram to a prior art solution based on a Rel-15 solution with 4 receiver (Rx) antenna (Curve C2').

The new code obtained according to the embodiments of the invention (curve C1') exhibits a coding gain around 1.3 dB with respect to the Rel 15 solution (Curve C2').

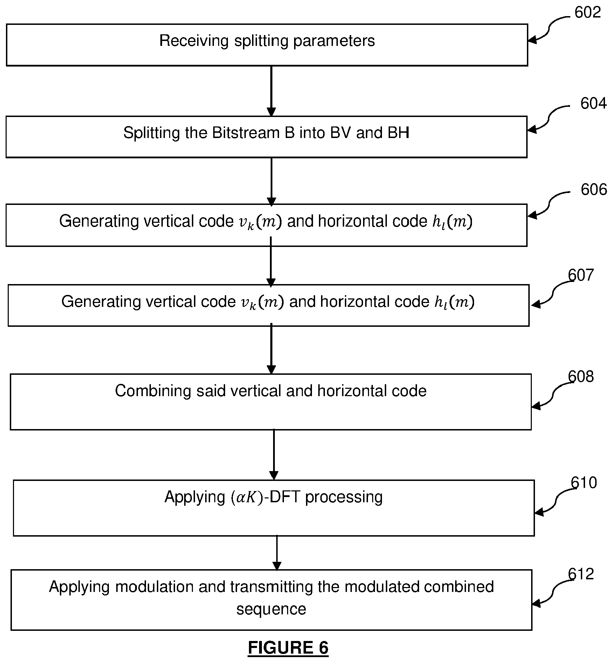

Figure 6 is a flowchart representing a method of transmitting a digital input message $m$ defined as $m$ = 0,1,..., $2^B$ - 1 corresponding to control data used in control channel (such as for example an uplink control channel) through a communication channel 3, according to some embodiments.

In step 604, the bitstream m of B channel bits is split into the two components comprising the first component of size *BV* and the second component of size *BH*, such that $B = BV + BH$, using a set of splitting parameters (for example user and/or system preferences) received at step 602.

In step 606, the vertical code sequence $v_k(m)$ is generated from the *BV* channel bits and in step 607 the horizontal code sequence $h_l(m)$ is generated from the BH channel bits. Step 606 and 607 may be alternatively performed according a different order or in parallel.

The vertical and horizontal codes may be generated using a non-coherent code. The non-coherent code may be chosen as a codeword from a linear error correcting code, having a length $\alpha$L and a rank BV, represented by a generator matrix *G(L, BV)* for the generation of the horizontal code or as a codeword from a linear error correcting code, having a length *L* and a rank BH, represented by a generator matrix *G(L, BH)* for the generation of the horizontal code. The generation of the horizontal code may use frequency hopping and permutation of the BH bits to apply frequency hopping.

In step 608, the vertical code $v_k(m)$ obtained on step 606 may be combined with the horizontal code ($h_l(m)$) obtained on step 607 to determine the code sequence $c_{k,l}(m)$. In one embodiment, the code sequence $c_{k,l}(m)$ may be determined from or as the product of the vertical code $v_k(m)$, the phasor and the horizontal code ($h_l(m)$), according to equation (3).

In step 409, (L $\times$ $\alpha$K)-DFT may be applied to each column of the 2-dimensional codeword $c_{k,l}(m)$, which provides the output $M_{k,l}(m)$ defined according to equation (4).

In a single-carrier or multi-carrier modulation step 410, each of the $\alpha$K elements of $M_{k,l}(m)$, for a particular index l, is mapped to the lth OFDM symbol in adjacent frequency-domain positions. If frequency-hopping has been applied in step 607, the $\alpha$K adjacent elements can be distributed arbitrarily in the frequency grid for different OFDM symbols, while being spaced as uniformly as possible to provide a maximum amount of diversity to combat signal fading.

In step 411, the modulated combined sequence x(m) is transmitted over the communication channel 3 using the transmit antennas.

The communication system 10 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 10 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 10 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

The transmitter 1 and/or the receiver 5 may be any physical internet-enabled device/object provided with required hardware and/or software technologies enabling communication over Internet. The transmitter 1 and/or the receiver 5 may be any standard internet connected-devices such as desktop computers, servers, virtual machines laptops, smart-phones, tablets. In some applications, the transmitter 1 and/or the receiver 5 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using OFDM modulation, the invention also applies to other types of single-carrier and multi-carrier modulation.

Additional advantages and modifications will readily appear to those skilled in the art. The invention in its broader aspects is therefore not limited to the specific details, representative methods, and illustrative examples shown and described.

**Claims**

1.  A transmitter device (1) for transmitting a digital input message corresponding to control data used in a control channel through a communication channel (3), the transmitter device comprising a set of transmit antennas, the input message $m$ comprising a number $B$ of bits, said device comprising:

- a splitter (110) configured to split the input message m comprising said B channel bits into a first component comprising $BV$ bits and a second component comprising $BH$ bits such that $B = BH + BV$, using a set of splitting parameters;

- a vertical code generator (112) configured to generate a vertical code $v_k(m)$ of size $P$ from the first component of $BV$ bits;

- A horizontal code generator (114) configured to generate a horizontal code $h_l(m)$ of size L from the second component of $BH$ bits;

- a combiner (14) configured to combine said vertical code $v_k(m)$ with said horizontal code $h_l(m)$, which provides a combined code sequence, the transmitter device (1) comprising a modulator for each transmit antenna configured to apply a single carrier or multi-carrier modulation to the combined sequence, the transmitter device being configured to transmit the modulated combined sequence over the communication channel using said transmit antennas, said modulation providing modulation symbols grouped into resource blocks, each resource block comprising resource elements, wherein the size $P$ of the vertical code is equal to the number of resource elements in each of the $L$ modulation symbols in time and/or frequency.

2. The transmitter device of claim 1, wherein the combined sequence is determined from the product of the vertical code and the horizontal code.

3. The transmitter device of claim 2, wherein the combined sequence is determined as the product of the vertical code, a phasor term, and the horizontal code, the phasor term being equal to $e^{j\beta lk mod2}$ and the combined code sequence being equal to:

$$c_{l,k}(m) = v_k(m)e^{j\beta k mod2}h_l(m).$$

4. The transmitter device of any preceding claim, wherein each modulator is configured to provide modulation symbols grouped into resource blocks, each resource block comprising resource elements, and wherein the size $P$ of the vertical code is equal to the number $\alpha K$, with $\alpha$ representing the number of modulation carriers per resource block and $K$ represents the minimal number of physical resource blocks, the number $L$ corresponding to the time-window over which the message is encoded, the vertical code corresponding to a vertical dimension representing the resource elements and the horizontal code corresponding to an horizontal dimension representing time or modulation symbols.

5. The transmitter device of any preceding claim, wherein the vertical code is configured to map said $BV$ bits into the vertical vector $v_k(m)$ comprising P complex numbers from a given alphabet.

6. The transmitter device of any preceding claim, wherein the horizontal code is configured to map said $BH$ bits into the horizontal vector $h_l(m)$ comprising L complex numbers from a given alphabet.

7. The transmitter device of any preceding claim, wherein at least one of the vertical and horizontal codes are constructed using a non-coherent block code, the non-coherent code used to generate the vertical code being determined as a codeword $m \bmod 2^{BV}$, from a (P, BV) linear error correcting code, of length P and a rank BV and/or the non-coherent code used to generate the horizontal code is chosen as a codeword $_L m \bmod 2^{-BV}{}_J$, from a (L, BH) linear error correcting code, of length L and a rank $BH$.

8. The transmitter device of any preceding claim, wherein the horizontal code is constructed using an orthogonal code chosen from a unitary signal set.

9. The transmitter device of any preceding claim 4 to 8, wherein the horizontal code generator is configured to perform a frequency-hopping operation to generate $F$ a plurality of horizontal codewords $h_{l,f}(m)$, with 1 = 0,1, ...,L - 1 and f = 0,1, ..., F - 1, each elementary horizontal codeword being used for a particular part of the modulation spectrum at a different time instant when the elementary horizontal codeword is mapped to modulation symbols.

10. The transmitter device of claim 9, wherein the plurality of F codewords are generated from the same horizontal code and said $BH$ bits, said $BH$ bits being previously permuted using a permutation operation.

11. The transmitter device of any preceding claim, wherein the numbers of bits $BV$ of the vertical code and the number of bits of the horizontal code $BH$ are chosen so that the rates $BH/NH$ and $BV/NV$ are substantially equal, with $NH$

= *L and NV = αK.*

12. The transmitter device of claim 11, wherein if *BH/NH* is less than $BH.2^{-\lfloor \log_2 NH \rfloor}$, then an orthogonal code with $\lfloor \log_2 NH \rfloor$ bits may be used to generate the horizontal code.

13. The transmitter device of any preceding claim 11 and 12, wherein if *BV/NV* is less than $BV.2^{-\lfloor \log_2 NV \rfloor}$, then an orthogonal code with $\lfloor \log_2 NV \rfloor$ bits may be used to generate the vertical code.

14. The transmitter device of any preceding claim 4 to 13, wherein it comprises a processing unit configured to perform a P-Discrete Fourier Transform processing of each column of the combined sequence, which provides a processing unit output comprising elements $M_{k,l}(m)$.

15. The transmitter device of claim 14, wherein the $(k,l)^{th}$ output of processing unit is:

$$M_{k,l}(m) = \frac{1}{\sqrt{\alpha K}} \sum_{k'=0}^{\alpha K - 1} v_{k'}(m) e^{j\beta k' \bmod 2} e^{-j\left(\frac{2\pi k k'}{\alpha K}\right)} h_l(m) \ ,$$

with *k* = 0,1, ...., *αK* - 1 and *l* = 0,1, ..., *L* - 1.

16. A method of transmitting a digital input message corresponding to control data used in a control channel through a communication channel (3), the transmitter device comprising a set of transmit antennas, the input message *m* comprising a number *B* of bits, the method comprising:

    - splitting (604) the input message *m* comprising said B channel bits into a first component comprising *BV* bits and a second component comprising *BH* bits such that *B = BH + BV,* using a set of splitting parameters;
    - generating (606) a vertical code $v_k(m)$ of size *P* from the first component of *BV* bits;
    - generating (607) a horizontal code $h_l(m)$ of size *L* from the second component of *BH* bits;
    - combining (608)said vertical code $v_k(m)$ with said horizontal code $h_l(m),$ which provides a combined code sequence,
    the method further comprises, for each transmit antenna, applying a single carrier or multi-carrier modulation to the combined sequence, and transmitting the modulated combined sequence over the communication channel using said transmit antennas, said modulation providing modulation symbols grouped into resource blocks, each resource block comprising resource elements,
    wherein the size *P* of the vertical code is equal to the number of resource elements in each of the *L* modulation symbols in time and/or frequency.

<u>10</u>

FIGURE 1

<u>1</u>

FIGURE 2

<u>30</u>

301
Calculation Unit

302
Metric determination Unit

303
Selection unit

**FIGURE 3**

**FIGURE 4**

**FIGURE 5**

```
                                                              ┌─ 602
┌──────────────────────────────────────────────────────┐
│              Receiving splitting parameters            │
└──────────────────────────────────────────────────────┘
                           │
                           ▼                                  ┌─ 604
┌──────────────────────────────────────────────────────┐
│         Splitting the Bitstream B into BV and BH       │
└──────────────────────────────────────────────────────┘
                           │
                           ▼                                  ┌─ 606
┌──────────────────────────────────────────────────────┐
│  Generating vertical code $v_k(m)$ and horizontal code $h_l(m)$  │
└──────────────────────────────────────────────────────┘
                           │
                           ▼                                  ┌─ 607
┌──────────────────────────────────────────────────────┐
│  Generating vertical code $v_k(m)$ and horizontal code $h_l(m)$  │
└──────────────────────────────────────────────────────┘
                           │
                           ▼                                  ┌─ 608
┌──────────────────────────────────────────────────────┐
│          Combining said vertical and horizontal code   │
└──────────────────────────────────────────────────────┘
                           │
                           ▼                                  ┌─ 610
┌──────────────────────────────────────────────────────┐
│              Applying $(\alpha K)$-DFT processing       │
└──────────────────────────────────────────────────────┘
                           │
                           ▼                                  ┌─ 612
┌──────────────────────────────────────────────────────┐
│  Applying modulation and transmitting the modulated combined  │
│                        sequence                        │
└──────────────────────────────────────────────────────┘
```

## FIGURE 6

Europäisches
Patentamt

European
Patent Office

Office européen
des brevets

# EUROPEAN SEARCH REPORT

**Application Number**

**EP 21 30 6921**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INCORPORATED: "Potential coverage enhancement techniques for PUCCH", 3GPP DRAFT; R1-2009802, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20201026 - 20201113 17 November 2020 (2020-11-17), XP051955627, Retrieved from the Internet: URL:https://ftp.3gpp.org/tsg_ran/WG1_RL1/T SGR1_103-e/Docs/R1-2009802.zip R1-2009802/R1-2009802 Potential coverage enhancement techniques for PUCCH.docx [retrieved on 2020-11-17] * paragraph [02.2] - paragraph [02.3] * ----- | 1-16 | INV. H04L27/26 H04L5/00 |
| A | EP 2 525 542 A2 (LG ELECTRONICS INC [KR]) 21 November 2012 (2012-11-21) * paragraph [0164] * * figure 29b * ----- | 14 | TECHNICAL FIELDS SEARCHED (IPC) H04L |

The present search report has been drawn up for all claims

| Place of search | Date of completion of the search | Examiner |
|---|---|---|
| Berlin | 15 June 2022 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6921

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | | Publication date | Patent family member(s) | | Publication date |
|---|---|---|---|---|---|
| EP 2525542 | A2 | 21-11-2012 | CA | 2786987 A1 | 21-07-2011 |
| | | | CN | 102959917 A | 06-03-2013 |
| | | | EP | 2525542 A2 | 21-11-2012 |
| | | | EP | 3547631 A1 | 02-10-2019 |
| | | | EP | 3799341 A1 | 31-03-2021 |
| | | | JP | 5789616 B2 | 07-10-2015 |
| | | | JP | 2013517667 A | 16-05-2013 |
| | | | KR | 20110084466 A | 25-07-2011 |
| | | | KR | 20170046118 A | 28-04-2017 |
| | | | US | RE48741 E | 14-09-2021 |
| | | | US | 2012300726 A1 | 29-11-2012 |
| | | | US | 2014286259 A1 | 25-09-2014 |
| | | | US | 2015173068 A1 | 18-06-2015 |
| | | | WO | 2011087314 A2 | 21-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8315185 B2

- EP 20305929

**Non-patent literature cited in the description**

- **GABI SARKIS ; PASCAL GIARD ; ALEXANDER VARDY ; CLAUDE THIBEAULT ; WARREN J. GROSS.** Fast List Decoders for Polar Codes. *IEEE Jounal on Selected Areas in Communications,* February 2016, vol. 34 (2